# EUROPEAN PATENT APPLICATION

(11) **EP 1 262 494 A2**
(43) Date of publication of application: **04.12.2002**
(21) Application number: 02253649.4
(22) Date of filing: 23.05.2002
(51) Int. Cl.: C08B 37/00, C08L 5/16, G01N 27/00

(54) **Anionic cyclodextrin compositions having volatile combustion products with halogen O, S atoms or their combinations as heteroatoms for use with gas-phase or vapor-phase element specific detectors**

(30) Priority: 23.05.2001 US 293148 P; 29.05.2001 US 294048 P
(71) Applicant: THE TEXAS A & M UNIVERSITY SYSTEMS, College Station, TX 77843 (US)
(72) Inventor: Vigh, Gyula, Magnolia, Texas 77355 (US)
(74) Representative: W.P. Thompson & Co.

(57) **Abstract**

Non-interfering, anionic cyclodetrins and anionic cyclodextrin systems having volatile combustion products including O or S or halogen atoms or combinations thereof as their only heteroatoms are disclosed that can be used in analytical techniques utilizing element specific detectors. Analytical techniques and apparatuses are also disclosed using these anionic cyclodetrins and anionic cyclodextrin systems to detect analytes.

## Description

### BACKGROUND OF THE INVENTION

### 1. Field of the Invention

The present invention relates to single-isomer and multiple-isomer anionic cyclodextrin compositions that have at least one single-type substituent or multiple-type substituents, and whose combustion products are all volatile and have O or S or halogen atoms or combinations thereof as their only heteroatoms. These anionic cyclodextrin compositions can be used in conjunction with gas-phase or vapor-phase element-specific detectors.

More particularly, the present invention relates to single-isomer and multiple-isomer anionic cyclodextrin compositions that have at least one single-type substituent or multiple-type substituents, and whose combustion products are volatile and have O or S or halogen atoms or combinations thereof as their only heteroatoms, and to pluralities of single-isomer and multiple-isomer anionic cyclodextrin composition that have at least one single-type substituent or multiple-type substituents, and whose combustion products are volatile and have O or S or halogen atoms or combinations thereof as their only heteroatoms. These single-isomer and multiple-isomer anionic cyclodextrin compositions or pluralities thereof can be used in conjunction with gas-phase or vapor-phase element-specific detectors (ESDs), such as nitrogen-selective gas-phase chemiluminescence detectors, nitrogen-phosphorus thermoionic detectors, atomic emission plasma detectors, inductively-coupled plasma - mass spectrometric (ICP-MS) detectors, element-specific GC detectors such as nitrogen or phosphorus specific GC detectors, *etc.*

### 2. Description of the Related Art

Single-isomer and multiple-isomer anionic cyclodextrin compositions contain, respectively, single-isomers and multiple-isomers of anionic cyclodextrins and their counterions. The anionic functional groups of the single-isomer and multiple-isomer anionic cyclodextrins can be strong electrolyte functional groups or weak electrolyte functional groups, including, but not restricted to, carboxyalkyl, phenolate, phosphate, sulfate or sulfoalkyl ether functional groups or mixtures thereof. The counterions of the anionic cyclodextrins can be derived from strong electrolytes or weak electrolytes.

Single-isomer and multiple-isomer anionic cyclodextrin compositions are widely used for, among others, analytical, pharmaceutical, medical, cosmetic, food and industrial applications [for a monograph, *see, e.g.*, B. Chankvetadze, Capillary Electrophoresis in Chiral Analysis, J. Wiley, New York, 1997]. Single-isomer and multiple-isomer anionic cyclodextrins contain the cyclomaltohexaose, cyclomaltoheptaose, cyclomaltooctaose, *etc.* core structure, which is derivatized to carry at least one anionic functional group. Single-isomer and multiple-isomer anionic cyclodextrins may carry a multiplicity of anionic functional groups, and, in addition, one or more, same or different, charged or noncharged additional substituent groups. Depending on the number and loci of the substituent groups, both anionic and otherwise, the anionic cyclodextrin compositions may be single-isomer compositions or may contain more than one isomer.

In order to maintain electroneutrality, the single-isomer and multiple-isomer anionic cyclodextrin compositions contain, in addition to the single-isomer and multiple-isomer cyclodextrin anions proper, cationic counterions. The counterions of the single-isomer and multiple-isomer anionic cyclodextrins can be derived from strong electrolytes or weak electrolytes.

The typical single-isomer and multiple-isomer anionic cyclodextrins contain weak electrolyte functional groups (*e.g.*, pKₐ values in the 2 to 10 range) or strong electrolyte functional groups. Typically, the single-isomer and multiple-isomer anionic cyclodextrins that contain weak electrolyte functional groups contain carboxylate, phenolate, phosphate, phosphonate or boronate functional groups or mixtures thereof. The single-isomer and multiple-isomer anionic cyclodextrins which contain strong electrolyte functional groups typically contain sulfoalkylether, sulfoarylether, sulfonate or sulfate functional groups. Their counterions are typically hydronium ions, alkali metal cations or alkaline earth metal cations, protonated amines, quaternary ammonium cations or phosphonium cations.

Present anionic cyclodextrin compositions that include protonated amines or quaternary ammonium compounds are undesirable when used with nitrogen-selective detectors, because they contribute a high background signal level. Alkali metal cations, alkaline earth metal cations or phosphonium cations are also undesirable when used with gas-phase ESDs, because the combustion products of these counterions are not sufficiently volatile to leave the gas-phase detector systems as vapors or gases and they contaminate the detector systems.

Thus, there is a need in the art for single-isomer and multiple-isomer anionic cyclodextrin compositions and single-isomer and multiple-isomer anionic cyclodextrin composition systems whose combustion products do not significantly interfere with post-combustion element-specific detection.

### SUMMARY OF THE INVENTION

The present invention provides single-isomer and multiple-isomer anionic cyclodextrin compositions that include at least one single-type substituent or multiple-type substituents, and whose combustion products are volatile and have O or S or halogen atoms or combinations thereof as their only heteroatoms. These anionic cyclodextrin compositions can be used in conjunction with gas-phase or vapor-phase, element-specific detectors (ESDs), such as nitrogen-selective gas-phase chemiluminescence detectors, atomic emission plasma detectors, inductively-coupled plasma mass spectrometric (ICP-MS) detectors, element-specific GC detectors such as nitrogen or phosphorus specific GC detectors, *etc.*

The present invention also provides analytical applications using the single-isomer and multiple-isomer anionic cyclodextrin compositions that have at least one single-type substituent or multiple-type substituents, and whose combustion products are volatile and have O or S or halogen atoms or combinations thereof as their only heteroatoms, where the applications include chromatographic, electrophoretic and extractive separation applications or flow-injection analysis applications for separating and/or detecting analytes that contain heteroatoms other than O or S or halogen atoms or combinations thereof.

The present invention also provides single-isomer and multiple-isomer anionic cyclodextrin compositions that include an anion with a cyclomaltooligoose core structure and counterion, wherein the combustion products of the compositions are volatile and have O or S or halogen atoms or combinations thereof as their only heteroatoms.

The present invention also provides single-isomer and multiple-isomer anionic cyclodextrin compositions formed *in situ* by reaction the acid form of an anion with a cyclomaltooligoose core structure with a strong base to form an anion and a counterion of this invention, wherein the combustion products of the compositions are volatile and include O or S or halogen atoms or combinations thereof as their only heteroatoms.

The present invention also provides single-isomer and multiple-isomer anionic cyclodextrin compositions that include at least one anion with a cyclomaltohexaose, cyclomaltoheptaose, cyclomaltooctaose, cyclomaltononaose, cyclomaltodecaose, cyclomaltoundecaose, cyclomaltododecaose, cyclomaltotridecaose core structure having at least one single-type substituent or multiple-type substituents and a counterion, wherein the combustion products of the compositions are volatile and include O or S or halogen atoms or combinations thereof as their only heteroatoms.

The present invention also provides single-isomer and multiple-isomer anionic cyclodextrin compositions that are formed *in situ* by reacting the acid form of an anion with a cyclomaltohexaose, cyclomaltoheptaose, cyclomaltooctaose, cyclomaltononaose, cyclomaltodecaose, cyclomaltoundecaose, cyclomaltododecaose, cyclomaltotridecaose core structure having at least one single-type substituent or multiple-type substituents with a strong base to form an anion and a counterion of this invention, wherein the combustion products of the compositions are volatile and include O or S or halogen atoms or combinations thereof as their only heteroatoms.

The present invention also provides anionic cyclodextrin compositions or *in situ* formed anion cyclodextrin anions covering a desired range of anionic substitution by including e.g further comprising, a plurality of anionic cyclodextrins of this invention .

The present invention also provides single-isomer and multiple-isomer anionic cyclodextrin compositions that include an anionic cyclodextrin carrying an anionic functional group selected from the group consisting of carboxylates, phenolates, sulfonates, sulfoalkylethers, sulfoarylethers, sulfates and mixtures or combinations thereof and a counterion selected from the group consisting of oxonium ions, sulfonium ions, sulfoxonium ions and mixtures or combinations thereof, wherein the combustion products of the compositions are volatile and have O or S or halogen atoms or combinations thereof as their only heteroatoms. Again, these compositions can also be formed *in situ* from the respective acid and base forms of their constituents.

The present invention also provides an analytical apparatus for detecting an analyte including a combustion zone where at least one analyte dissolved in a solution comprising at least one anionic cyclodextrin composition or *in situ* formed cyclodextrin anion of this invention is converted to its corresponding volatile combustion products and a detector capable of detecting at least one of the analyte combustion products.

The present invention also provides a method including the steps of dissolving a sample comprising at least one analyte in a solution comprising at least one anionic cyclodextrin composition or in *situ* formed cyclodextrin anion of this invention, combusting the sample to its corresponding volatile combustion products and detecting at least one analyte combustion product.

The present invention also provides a method including the steps of dissolving a sample comprising at least one analyte in a solution comprising at least one anionic cyclodextrin composition or *in situ* formed cyclodextrin anion of this invention, combusting the sample to its corresponding volatile combustion products, converting at least one of the analyte combustion products into a transformate and detecting at least one transformate.

The present invention also provides an analytical apparatus for detecting an analyte including a separation component where a sample comprising at least one analyte or a plurality of analytes dissolved in a solution comprising at least one anionic cyclodextrin composition or *in situ* formed cyclodextrin anion of the present invention is separated into its constituents, a combustion zone where each constituent is converted to its corresponding volatile combustion products and a detector capable of detecting at least one of the analyte combustion products.

The present invention also provides an analytical system for detecting an analyte including a separation apparatus where a sample dissolved in a solution comprising an anionic cyclodextrin composition or *in situ* formed cyclodextrin anion or a solution comprising an anionic cyclodextrin system or *in situ* formed cyclodextrin anion system of the present invention is separated into its constituents, a combustion zone where each constituent is converted to its corresponding volatile combustion products, a transformation zone where at least one of the analyte combustion products is converted into a transformate and a detector capable of detecting at least one of the transformates.

### DESCRIPTION OF THE DRAWINGS

The invention can be better understood with reference to the following detailed description together with the appended illustrative drawings in which like elements are numbered the same:

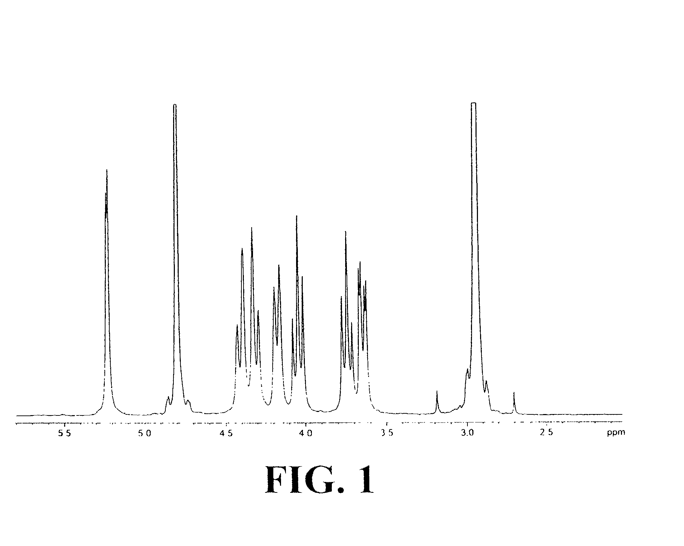

Figure 1 graphically depicts the 300 MHz ¹H NMR spectrum of the D₂O solution of the trimethylsulfonium salt of hepta(6-*O*-sulfo)-β-cyclodextrin, a typical, anionic cyclodextrin composition of the present invention whose combustion products are volatile and free of heteroatoms other than O and S.

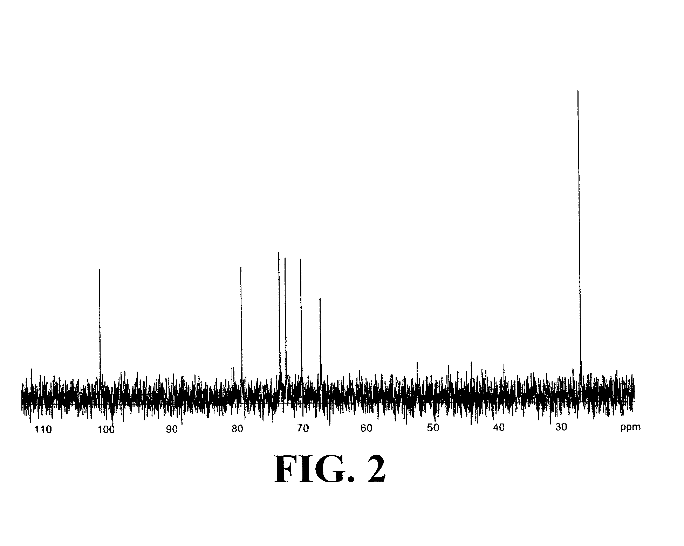

Figure 2 graphically depicts the 75 MHz ¹³C NMR spectrum of the D₂O solution of the trimethylsulfonium salt ofhepta(6-*O*-sulfo)-β-cyclodextrin, a typical, anionic cyclodextrin composition of the present invention whose combustion products are volatile and free of heteroatoms other than O and S.

### DETAILED DESCRIPTION OF THE INVENTION

The inventor has found that a new class of anionic cyclodextrin compositions or *in situ* formed cyclodextrin anions and anionic cyclodextrin systems or *in situ* formed cyclodextrin anion systems can be constructed that allow element specific detection of analytes without the typical contamination of the analytes by the combustion products of the anionic cyclodextrin compositions that contain the element to be detected or lack the needed volatility to pass through the analytical detection system without fouling the system.

Anionic cyclodextrin compositions or *in situ* formed cyclodextrin anions that have volatile combustion products including O or S or halogen atoms or combinations thereof as their only heteroatoms make possible the use of ESDs in areas which hitherto have been unaccessible to ESDs because the anionic cyclodextrin compositions included undesired heteroatoms (*e.g.*, N in protonated amines and quaternary ammonium compounds), or atoms whose combustion products are nonvolatile, cannot leave components of the analytical apparatus such as the ESDs as vapors or gases and contaminate the components such as the ESDs (*e.g.*, P in organophosphates or in phosphonium compounds or alkali metal cations or alkaline earth metal cations).

The present invention broadly relates to single-isomer and multiple-isomer anionic cyclodextrin compositions or *in situ* formed cyclodextrin anions having at least one single-type substituent or multiple-type substituents or a plurality of single-isomer and multiple-isomer anionic cyclodextrin compositions or *in situ* formed cyclodextrin anions, where the compositions or anions have volatile combustion products with O or S or halogen atoms or combinations thereof as their only heteroatoms, and can be used in conjunction with gas-phase or vapor-phase element-specific detectors.

Although the reagents are designed for use primarily in aqueous solutions, where the solvent in water, the reagents can also be used with non-aqueous or mixed aqueous /non-aqueous solvent systems such as solvent systems including water, a lower alcohol, a lower carboxylic acid, a lower ether, a lower cyclic ether, a lower ester, a lower ketone, a lower halocarbon, and/or a lower hydrocarbon or mixtures and combinations thereof. The term lower means that the compounds have 10 or fewer carbon atoms, preferably 8 or fewer carbon atoms, and particularly 6 or fewer carbon atoms. All of the solvents for use in this invention must have volatile combustion products with O or S or halogen atoms or combinations thereof as their only heteroatoms.

The present invention also relates to anionic cyclodextrin compositions or *in situ* formed cyclodextrin anions capable of covering adesired anionic substitution range including a plurality of anionic cyclodextrins or *in situ* formed cyclodextrin anions of this invention.

The present invention also relates to an analytical apparatus for detecting an analyte including a combustion chamber where an analyte dissolved in a solution comprising at least one anionic cyclodextrin composition or *in situ* formed cyclodextrin anion of this invention is converted to its corresponding volatile combustion products and a detector capable of detecting at least one of the analyte combustion products.

The present invention also relates to a method including the steps of dissolving the sample comprising at least one analyte in a solution comprising at least one anionic cyclodextrin composition or *in situ* formed cyclodextrin anion of this invention, combusting the sample and detecting at least one of the volatile analyte combustion products.

The present invention also relates to an analytical apparatus for detecting an analyte including a separation component where a sample comprising at least one analyte dissolved in a solution comprising at least one anionic cyclodextrin composition or *in situ* formed cyclodextrin anion of the present invention is separated, a combustion chamber where each constituent is converted to its corresponding volatile combustion products and a detector capable of detecting at least one of the analyte combustion products.

The anionic cyclodextrin compositions or *in situ* formed cyclodextrin anions or anionic cyclodextrin systems or *in situ* formed cyclodextrin anion systems of this invention are characterized by at least the following properties: (1) each combustion product of each anionic cyclodextrin component is volatile at the operating conditions of the detection system and includes O or S or halogen atoms or combinations thereof as their only heteroatoms; (2) each anionic cyclodextrin component includes a cyclomaltooligoose core structure (where oligo ranges between about 6 and about 13); (3) each anionic cyclodextrin component provides adequate anionic charge over its application range; and (4) each anionic cyclodextrin component permits variation ofthe solubility, hydrophobicity and/or electrophoretic mobility of the counterion(s) to match the requirements or constraints of the analytical system used.

An anionic cyclodextrin composition or *in situ* formed cyclodextrin anion of this invention comprises at least one anionic cyclodextrin ion with at least one weak electrolyte or strong electrolyte anionic functional group and a strong base-derived cationic counterion, where the composition has volatile combustion products with O or S or halogen atoms or combinations thereof as their only heteroatoms.

Suitable anionic cyclodextrin derivative ions for use in the construction of the anionic cyclodextrin composition or *in situ* formed cyclodextrin anion of this invention have, without limitation, a cyclomaltooligoose core structure and at least one anionic functional group.

Suitable cyclomaltooligoose core structures include, without limitation, cyclomaltohexaose, cyclomaltoheptaose, cyclomaltooctaose, cyclomaltononaose, cyclomaltodecaose, cyclomaltoundecaose, cyclomaltododecaose, or cyclomaltotridecaose core structures or mixtures or combinations thereof.

Suitable anionic functional groups include, without limitation, one or more carboxylate moieties, one or more phenolate moieties, one or more sulfonate moieties, one or more sulfate moieties, one or more sulfoarylether moieties, one or more sulfoalkylether moieties or mixtures or combinations thereof, all having volatile combustion products with O or S or halogen atoms or combinations thereof as their only heteroatoms at the operating conditions of a given detection system.

The cyclodextrin derivative anions of this invention can also include other single-type or multiple-type substitutents, including, without limitation, alkyl ether, alkenyl ether, alkynyl ether, cycloalkyl ether, cycloalkenyl ether, cycloalkynyl ether or aromatic ether groups, alkyl ester, alkenyl ester, alkynyl ester, cycloalkyl ester, cycloalkenyl ester, cycloalkynyl ester, or aromatic ester groups, primary-, secondary- and tertiary alcohol groups, ketone groups, aldehyde groups or combinations and mixtures thereof; provided these cyclodextrin derivative anions have volatile combustion products with O or S or halogen atoms or combinations thereof as their only heteroatoms.

Suitable cationic counterions for use in the construction of anionic cyclodextrin compositions of this invention include, without limitation, hydronium, oxonium, sulfonium, or sulfoxonium cations or mixture or combinations thereof, all having volatile combustion products with O or S or halogen atoms or combinations thereof as their only heteroatoms at The operating conditions of a given detection system.

Suitable cationic counterions for use with *in situ* formed cyclodextrin anions of this invention are obtained from their respective bases and include, without limitation, oxonium, sulfonium, or sulfoxonium cations or mixture or combinations thereof, all having volatile combustion products with O or S or halogen atoms or combinations thereof as their only heteroatoms at the operating conditions of a given detection system.

Preferred cyclodextrin anions for use in this invention having volatile combustion products with O or S or halogen atoms or combinations thereof as their only heteroatoms at the operating conditions of a given detection system include, without limitation, phenolic, carboxyalkyl, sul foalkylether or sulfate functional groups or mixtures or combinations thereof where the anionic group has fewer than twenty carbon atoms, preferably fewer than ten carbon atoms, particularly fewer than five carbon atoms, and especially fewer than four carbon atoms.

Preferred cationic counterions for use in this invention having volatile combustion products with O or S or halogen atoms or combinations thereof as their only heteroatoms at the operating conditions of a given detection system include, without limitation, hydronium ions, aryl pyrillium ions, R¹, R², R³-sulfonium ions, or R¹, R², R³-sulfoxonium ions or mixtures or combinations thereof, where R¹, R² and R³ are the same or different and are an alkyl group, cycloalkyl group, alkylcycloalkyl group, alkylaryl group, cycloalkylaryl group, arylalkyl group, arylcycloalkyl group, aryl group, alkyleneoxide group or alkylenesulfide group. Generally, the Rⁱ groups (i=1,2 or 3) have fewer than 20 carbon atoms, preferably, fewer than 10 carbon atoms, particularly, fewer than 5 carbon atoms, and especially fewer than 2 carbon atoms to adjust the solubility, hydrophobic - hydrophilic balance and/or electrophoretic mobility of the counterion.

Exemplary examples of cyclodextrin derivative anions for use in this invention having volatile combustion products with O or S or halogen atoms or combinations thereof as their only heteroatoms at the operating conditions of the detection system include, without limitation, phenolic, carboxymethyl, carboxyethyl, sulfoethylether, sulfopropyl ether, sulfobutylether or sulfate functional groups or mixtures or combinations thereof.

Exemplary examples of cationic counterions for use in this invention having volatile combustion products with O or S or halogen atoms or combinations thereof as their only heteroatoms at the operating conditions of the detection system include, without limitation, trimethylsulfonium ion, which can be obtained from trimethylsulfonium iodide, diethylmethylsulfonium ion, which can be obtained from its respective alkyl sulfide and methyl iodide, trimethylsulfoxonium ion, which can be obtained from trimethylsulfoxonium iodide, diethylmethylsulfoxonium iodide, which can be prepared from its respective alkyl sulfoxides and methyl iodide or mixtures or combinations thereof.

Additional information on anionic cyclodextrins can be found in co-pending United States Patent Application Serial No. 09/172,575 filed October 14, 1998, incorporated herein by reference.

The anionic cyclodextrin compositions of this invention can be produced in a number of ways, including, without limitation: (1) reaction of the acidic form of a respective anionic cyclodextrin with the parent base of the desired counterion; (2) percolation of the acidic form of a respective anionic cyclodextrin or its salt through a cation exchange column that holds the desired counterion; or (3) extraction of a respective ion pair with an organic solvent from an aqueous solution that holds a mixture of the acidic form of a respective anionic cycldextrin or its salt and the parent base of the desired counterion or its salt. The anionic cyclodextrin compositions of this invention can be stored and/or used either as solids or solutions. Additionally, the cyclodextrin anions can be formed *in situ* as previously described.

All references cited herein are incorporated by reference. While this invention has been described fully and completely, it should be understood that the invention may be practiced otherwise than as specifically described. Although the invention has been disclosed with reference to its preferred embodiments, from reading this description those of skill in the art may appreciate changes and modification that may be made which do not depart from the scope and spirit of the invention as described above.

## Claims

1. An anionic cyclodextrin composition comprising:
at least one cyclodextrin anion; and
at least one counterion,
where the at least one anion and the at least one counterion have volatile combustion products including O or S or halogen atoms or combinations thereof as their only heteroatoms.

2. A composition as claimed in claim 1, wherein the anion comprises a cyclomaltooligoose core structure.

3. A composition as claimed in claim 2, wherein the anion comprises a cyclomaltohexaose, cyclomaltoheptaose, cyclomaltooctaose, cyclomaltononaose, cyclomaltodecaose, cyclomaltoundecaose, cyclomaltododecaose or cyclomtotridecaose core structure or mixtures or combinations thereof.

4. A composition as claimed in claim 3, wherein the anion comprises a cyclomaltohexaose, cyclomaltoheptaose or cyclomaltooctaose core structure or mixtures or combinations thereof.

5. A composition as claimed in claim 1, wherein the anion has, along with at least one anionic functional group, at least one, single-type additional substituent or multiple-type additional substituents, where all anions and cations have volatile combustion products with O or S or halogen atoms or combinations thereof as their only heteroatoms.

6. A composition as claimed in claim 5, wherein the anion comprises a single-isomer cyclodextrin anion.

7. A composition as claimed in claim 5, wherein the anion comprises multiple isomers of a cyclodextrin anion.

8. A composition as claimed in any one of the preceding claims, comprising:
a plurality of counterions,
where each counterion has volatile combustion products including O or S or halogen atoms or combinations thereof as their only heteroatoms.

9. A composition as claimed in any one of the preceding claims, comprising:
a plurality of cyclodextrin anions,
where each anion and counterion have volatile combustion products including O or S or halogen atoms or combinations thereof as their only heteroatoms.

10. A composition as claimed in any one of the preceding claims, comprising:
a plurality of cyclodextrin anions; and
a plurality of counterions,
where each anion and counterion have volatile combustion products including O or S or halogen atoms or combinations thereof as their only heteroatoms.

11. An anionic cyclodextrin composition for use in element-specific detection systems comprising a solution including:
a solvent;
a cyclodextrin anion comprising an anionic functional group selected from the group consisting of carboxylate moieties, phenolate moieties, sulfonate moieties and sulfate moieties; and
a counterion selected from the group consisting of hydronium ions, oxonium ions, sulfonium ions, sulfoxonium ions and mixtures and combinations thereof,
where the anion and counterion and solvent have volatile combustion products with O or S or halogen atoms or combinations thereof as their only heteroatoms.

12. An anionic cyclodextrin composition for use in element-specific detection systems comprising a solution including:
a solvent;
a plurality of cyclodextrin anions, where each anion comprises an anionic functional group selected from the group consisting of carboxylate moieties, phenolate moieties, sulfonate moieties and sulfate moieties and mixtures or combinations thereof; and
a plurality of counterions selected from the group consisting of hydronium ions, oxonium ions, sulfonium ions, sulfoxonium ions and mixtures or combinations thereof,
where each anion and counterion and solvent have volatile combustion products with O or S or halogen atoms or combinations thereof as their only heteroatoms.

13. An apparatus for detecting an analyte comprising:
a separation component where a sample is separated into its components,
where the sample comprises at least one analyte and at least one cyclodextrin anion and at least one counterion, where the anion and counterion have volatile combustion products including O or S or halogen atoms or combinations thereof as their only heteroatoms and where at least one combustion product of the analyte is detectable;
a combustion zone where the sample is converted to its corresponding combustion products;
a gas-phase or vapor-phase element-specific detector (ESD) capable of detecting the at least one analyte combustion product.

14. An apparatus as claimed in claim 13, further comprising:
a transformation zone where at least one sample combustion product is converted into a transformate and a detector capable of detecting at least one transformate.

15. An apparatus as claimed in claim 13 or 14, wherein the ESD is selected from the group consisting of nitrogen-selective gas-phase chemiluminescence detectors, sulfur-selective gas-phase chemiluminescence detectors, nitrogen-phosphorus thermoionic detectors, atomic emission plasma detectors, inductively-coupled plasma - mass spectrometric (ICP-MS) detectors, and element-specific GC detectors such as nitrogen or phosphorus specific GC detectors.

16. An apparatus as claimed in any one of the preceding claims, wherein:
the cyclodextrin anion comprises an anionic functional group selected from the group consisting of carboxylate moieties, phenolate moieties, sulfonate moieties and sulfate moieties and mixtures or combinations thereof; and
the counterion is selected from the group consisting of hydronium ions, oxonium ions, sulfonium ions, sulfoxonium ions and mixtures or combinations thereof,
where the anion and counterion have volatile combustion products with O or S or halogen atoms or combinations thereof as their only heteroatoms.

17. A method for analysing an analyte comprising the steps of:
introducing a sample comprising at least one analyte and at least one cyclodextrin anion and at least one counterion into a combustion zone, where the anions and counterions have volatile combustion products including O or S or halogen atoms or combinations thereof as their only heteroatoms;
converting the sample, in the combustion zone, into its corresponding volatile combustion products including at least one analyte combustion product;
measuring the at least one analyte combustion product with a gas-phase or vapor-phase element-specific detector to produce a detector signal; and
determining an analyte concentration in the sample from the detector signal.

18. A method as claimed in claim 17, further comprising the step of:
converting the at least one analyte combustion product into a transformate; and
detecting the transformate.

19. A method as claimed in claim 17 or 18, wherein:
the cyclodextrin anions comprise an anionic functional group selected from the group consisting of carboxylate moieties, phenolate moieties, sulfonate moieties and sulfate moieties and mixtures or combinations thereof; and
the counterions are selected from the group consisting of hydronium ions, oxonium ions, sulfonium ions, sulfoxonium ions and mixtures or combinations thereof,
where the anion and counterion have volatile combustion products with O or S or halogen atoms or combinations thereof as their only heteroatoms.

20. A method for forming an anionic ion pairing reagent *in situ* comprising the steps of:
dissolving an acid form of a cyclodextrin anion in a solvent to form a solution, where the acid form of the anion has volatile combustion products including O or S or halogen atoms or mixtures and combinations thereof as their only
adding an amount of a base form of a counterion to the solution, where the base form of the counterion has volatile combustion products including O or S or halogen atoms or mixtures and combinations thereof as their only heteroatoms, and
where the amount is sufficient to convert substantially all of the acid form of the anion to its corresponding anion to form, *in situ,* a cyclodextrin anion; and
adding a sample comprising at least one analyte to the solution containing the *in situ* formed cyclodextrin anion.

21. A method as claimed in claim 20, wherein:
the cyclodextrin anion comprises an anionic functional group selected from the group consisting of carboxylate moieties, phenolate moieties, sulfonate moieties and sulfate moieties and mixtures or combinations thereof; and
the counterion is selected from the group consisting of hydronium ions, oxonium ions, sulfonium ions, sulfoxonium ions and mixtures or combinations thereof,
where the anion and counterion have volatile combustion products with O or S or halogen atoms or combinations thereof as their only heteroatoms.
